# EUROPÄISCHE PATENTSCHRIFT

(11) **EP 0 673 903 B1**
(45) Veröffentlichungstag und Bekanntmachung des Hinweises auf die Patenterteilung: **09.02.2000**
(21) Anmeldenummer: 95104181.3
(22) Anmeldetag: 21.03.1995
(51) Int. Cl.: C05G 1/00, C05D 3/02, C05D 5/00, C05D 3/04, C05F 11/00, C05F 15/00, C05G 3/08

(54) **Verfahren zum Herstellen von Düngemittel für die Basenversorgung aller Böden**
Process for manufacturing a fertiliser for soil basic conditioning
Procédé de préparation d'un engrais pour l'amendement basique des sols

(30) Priorität: 25.03.1994 DE 4410357
(43) Veröffentlichungstag der Anmeldung: 27.09.1995
(73) Patentinhaber: Holland, Rainer, D-76829 Landau (DE); Steigner, Rolf, D-76831 Billigheim-Ingenheim (DE); Klose, Siegfried, D-56626 Andernach (DE); Schneichel, Hans-Walter, D-56642 Kruft (DE)
(72) Erfinder: Holland, Rainer, D-76829 Landau (DE); Steigner, Rolf, D-76831 Billigheim-Ingenheim (DE); Klose, Siegfried, D-56626 Andernach (DE); Schneichel, Hans-Walter, D-56642 Kruft (DE)
(74) Vertreter: Patentanwälte Möll und Bitterich

(56) Entgegenhaltungen:
- EP-A- 0 075 541
- EP-A- 0 294 857
- EP-A- 0 652 192
- CH-A- 682 074
- DE-A- 3 600 400
- DE-A- 4 018 637
- DATABASE WPI Section Ch, Week 8949 Derwent Publications Ltd., London, GB; Class C04, AN 89-360802 & JP-A-01 270 583 ( IIDA KOGYO-SHO KK) , 27.Oktober 1989

## Beschreibung

Die Erfindung betrifft Verfahren zur Herstellung von Düngemitteln für die Basen-Versorgung aller landwirtschaftlich, forstwirtschaftlich, gärtnerisch und landschaftsbaulich genutzten Böden durch gezieltes Vermischen und/oder Homogenisieren von anorganischen Sekundärrohstoffen und von organischem Material.

Bei vielen gewerblichen und industriellen Prozessen entstehen anorganische, gegebenenfalls organische Neben- bzw. Beiprodukte oder Zwangsabfälle, d. h. Stoffe, welche in den betroffenen Betrieben nicht weiterverwertet werden können. Wurden diese anfallenden Stoffe zunächst deponiert, so wird heute überwiegend versucht, sie als Sekundärrohstoffe einer sinnvollen Nutzung zuzuführen. Die praktischen Lösungen sind derzeit jedoch noch sehr begrenzt.

Seit Jahren wird in der Land- aber insbesondere in der Forstwirtschaft mit Sorge eine sich beschleunigende Abnahme des pH-Wertes der Böden beobachtet, bedingt durch die sogenannten sauren Depositionen. Mit großem finanziellem und apparativen Aufwand werden die Böden vorwiegend mit kohlensaurem Magnesiumkalk behandelt, wobei der Kalk aus in Steinbrüchen gewonnenem und anschließend zerkleinertem Material besteht. Erste Erfolge dieser Behandlung der Waldböden können bereits nach wenigen Jahren verzeichnet werden. Effekte der Bodengenesung werden sichtbar im Hinblick auf das Bodenleben, die Schwermetallimmobilisierung usw.

Aus der älteren, nicht vorveröffentlichten EP 652 192 A ist ein Verfahren zum Herstellen eines Düngemittels für Kulturpflanzen und Verbesserungsmittels für Böden bekannt, welches darin besteht, daß organische Siedlungsabfälle, darunter jedenfalls Klärschlamm, mit organischem Material mit spezifisch großer sorptiver Oberfläche, darunter jedenfalls feinst vermahlene Getreiderückstände mit hohem Klebergehalt, mit mineralischen Nährstoffträgem und mit basisch wirkenden Stoffen, darunter jedenfalls Calciumoxid, gezielt vermischt und anschließend granuliert werden. Diesem Grundrezept können als weitere organische Bestandteile Sägemehl, Sägespäne, fein gehäckseltes oder vermahlenes Stroh und/oder Rindenhumus zugegeben werden.

Aus der Publikation JP 1270583-891027 ist ein kömiges Düngemittel bekannt, hergestellt aus Magnesiumsilikat-Pulver, welches unter Verwendung von Melasse oder PVA zu Granulaten von 3 bis 8 mm Durchmesser geformt wird.

Die Verwendung von Melasse bei der Herstellung von Düngemitteln auf der Basis von Carbonatationsschlamm ist auch aus der DE 36 00 400 A bekannt.

Die DE 42 11 013 A schließlich beschreibt ein Verfahren zur Herstellung von Granulaten aus Reststoffen, wie sie im Bereich der Landwirtschaft anfallen. Jedes Granulatkom besteht aus einer in einem ein Haufwerk bildenden, faserkörnigen bis pulverförmigen Saugstoff gebundenen, flüssigen Komponente und einem Klebstoff auf der Basis von Getreidemehl, Quark und/oder Harz. Je nach der Art der verwendeten Bestandteile läßt sich das Granulat als Dünger, als Pflanzsubstrat, als Brennstoff oder als Baustoff verwenden.

Der vorliegenden Erfindung liegt die Aufgabe zugrunde, ein weiteres Verfahren zur Herstellung von Düngemitteln für Böden anzugeben, deren Basenversorgung zu gering ist, um ein gesundes Pflanzenwachstum zu ermöglichen, verbunden mit der Möglichkeit, Rohstoffresourcen zu schonen und Reststoffe einer sinnvollen Verwertung zuzuführen.

Diese Aufgabe wird gelöst durch ein Verfahren mit den Merkmalen des Anspruchs 1.

Wesentlicher Vorteil des erfindungsgemäßen Verfahrens ist die gezielte, regelmäßige Basenversorgung aller land- und forstwirtschaftlich sowie landschafts- und gartenbaulich genutzter Böden, auch Rekultivierungsflächen. Schadelemente, insbesondere Schwermetalle und Aluminium, können in stabile chemische Bindungsformen überführt und inertisiert werden. Schädliche organische Verbindungen werden teilweise oder auch ganz eliminiert. Ein weiterer Vorteil ist darin zu sehen, daß die bisher deponierten Reststoffe aus industriellen und/oder gewerblichen Prozessen als anorganische/organische Sekundärrohstoffe einer sinnvollen Verwertung zugeführt werden, wobei eine laufende Überwachung auf Schadstoffe selbstverständlich ist.

Es versteht sich, daß sich diese Eigenschaften auch dann positiv auswirken, wenn keine Granulate sondern Kompaktate oder Pellets hergestellt werden.

Als anorganische Sekundärrohstoffe eignen sich basisch wirksame Schlämme, Stäube, Sande und/oder Kömungen aus der Kalkindustrie, der Natursteinindustrie, der chemischen Industrie, der Zuckerindustrie, der Nahrungs- und Genußmittelindustrie, der Wasseraufbereitung und der Abwasserbehandlung. Diese Ausgangsstoffe werden entsprechend der Bodenanalysen einerseits und des Sekundärrohstoffangebots andererseits ausgewählt und verarbeitet, so daß in allen Fällen ein gezielt einsetzbares Produkt entsteht.

Den wesentlichen Beitrag zur Stabilisation der Granulate leisten die feinst vermahlenen Getreiderückstände mit hohem Klebergehalt.

Gemäß einer Weiterbildung der Erfindung sind auch Polysaccharide, Huminate, Melasse, die bei der Zuckerproduktion anfällt, und Vinasse, die bei der Pilzproduktion anfällt, geeignet.

Auch Oxide und Hydroxide des Calciums und des Magnesiums sind als Granulatstabilisatoren geeignet. Es versteht sich, daß die Zugabe dieser mineralischen Stabilisatoren nur dann einen Sinn macht, wenn sie in der Grundrezeptur fehlen, beispielsweise wenn die Grundrezeptur auf der Basis von Silikaten zusammengestellt wurde.

Zur Verbesserung der Humusbilanz können organische Sekundärrohstoffe zugemischt werden. Dabei handelt es sich um Wirtschaftsdünger in Form von Stallmist bzw. Gülle.

Alle diese Bestandteile ermöglichen die erfindungsgemäße Herstellung eines Dünge- und Bodenverbesserungsmittels in Form von Granulaten, Kompaktaten oder Pellets, die über eine längere Zeitspanne gelagert und mit handelsüblichen landwirtschaftlichen Streuvorrichtungen problemlos ausgebracht werden können und die nach dem Ausbringen unter dem Einfluß von Feuchtigkeit je nach Form und Größe mehr oder weniger schnell zerfallen. Dabei werden in erster Linie die basisch reagierenden Bestandteile freigesetzt, die eine möglicherweise bereits eingetretene Übersäuerung des Bodens beseitigen, dabei Schwermetalle in stabile, unlösbare Bindungsformen überführen und den Pflanzen die nötigen Nährstoffe in bedarfsgerechter Form und Dosis bereitstellen.

Nach dem Vermischen aller Rohstoffe und Bestandteile wird das gebildete Granulat, Kompaktat bzw. Pelletat gesiebt, und zwar auf diverse Korngrößen zwischen größer 0 und ca. 20 mm, wobei anfallendes Über- und Unterkorn wieder in den Verfahrenskreislauf zurückgeführt wird.

Überraschenderweise hat sich herausgestellt, daß sich der erfindungsgemäße Dünger auch als Suspension mit den Merkmalen des Anspruchs 4 darstellen läßt. Herstellung, Transport und Lagerung erfolgen in Tanks. Die Suspension wird vor dem Ausbringen gebrauchsfertig verdünnt. Zum Ausbringen auf die Böden werden geeignete Sprühvorrichtungen verwendet, die eine sehr hohe Dosiergenauigkeit erlauben.

Gemäß einer vorteilhaften Weiterbildung der Erfindung können der Suspension zur Verbesserung der Humusbilanz auch organische Sekundärrohstoffe zugemischt werden, nämlich Wirtschaftsdünger und/oder Siedlungsabfälle in Form von Stallmist, Gülle, Kompost bzw. Klärschlamm und/oder Sägemehl bzw. Sägespäne, und/oder gehäckseltes oder gemahlenes Stroh und/oder Rindenhumus.

Gemäß einer vorteilhaften Weiterbildung der Erfindung können zur gezielten Steuerung der Pflanzenemährung spezielle Nährelemente und Mikronährstoffe zugeführt werden, insbesondere Stickstoff, Phosphor, Kali sowie Schwefel, Calcium, Magnesium, Silicium, Mangan, Eisen, Zink, Kupfer, Molybdän, Cobalt und/oder Bor in Form von geeigneten chemischen Verbindungen.

Die Mikronährstoffe Mangan, Eisen, Zink, Kupfer, Molybdän, Cobalt und Bor werden bevorzugt in Form von metallorganischen Komplexen zugemischt. Es versteht sich, daß auch einfache Salzverbindungen brauchbar sind.

Zur Stickstoffanreicherung werden bevorzugt Harnstoff, Ammoniumsulfat, Calciumnitrat und/oder Ammoniumnitrat zugemischt, zur Phosphatanreicherung Mono-, Di- und/oder Tricalciumphosphate, zur Kaliumanreicherung bevorzugt Kaliumchlorid und/oder Kaliumsulfat, insbesondere in Form von Rückstandkali.

Zur Magnesiumanreicherung stehen Magnesiumcarbonate, -oxide, -hydroxide, -silikate und-sulfate zur Verfügung.

Zur Schwefelanreicherung dienen die oben genannten sulfatischen Alkali- und Erdalkaliverbindungen.

Gemäß einer vorteilhaften Ausgestaltung der Erfindung werden silikathaltige Sekundärrohstoffe verwendet, um die Böden gezielt mit Kieselsäure anzureichern. Hierzu eignet sich als Sekundärrohstoff Kieselgur aus Filtrationsanlagen, wie sie z. B. in Brauereien, Weinkellereien bzw. der Nahrungs- und Genußmittelindustrie allgemein in großem Umfang eingesetzt werden.

Da viele Calcium- und/oder Magnesiumsilikate, insbesondere aus basischen Gesteinsmehlen, die Eigenschaft haben, sich unter dem Einfluß von Witterung und Bodenlösung sehr langsam aufzulösen, werden basisch wirksame, silikatische Sekundärrohstoffe bevorzugt eingesetzt, wenn ein Düngemittel hergestellt werden soll, mit dem eine über Jahre anhaltende sehr schonende Versorgung der Böden mit Basen erreicht werden soll.

Wird eine sehr schnelle basische Wirkung gewünscht, dann werden nicht Silikate, sondern bevorzugt Oxide oder Hydroxide, gegebenenfalls feinstteilige Carbonate des Calciums oder Magnesiums verwendet.

Durch gezielte Vermischung der Silikate mit den zuletzt genannten Calciumverbindungen können Düngemittel hergestellt werden, die eine sehr genaue und langfristige pH-Steuerung bodenindividuell ermöglichen.

Gemäß einer bevorzugten Ausgestaltung der Erfindung werden zur Beeinflussung der Pflanzenverfügbarkeit des Stickstoffs Mineralisations- und/oder Nitrifikationshemmer zugemischt. Ein solches Fertigprodukt ist dann auch für leichte Böden geeignet, da die Stickstoffverluste durch Auswaschen reduziert werden.

Der vorliegenden Erfindung liegt die Erkenntnis zugrunde, daß es nicht möglich ist, jeden beliebigen Boden und jede beliebige Kulturpflanze mit einem Einheitsdünger bzw. einem Einheits-Bodenverbesserungsmittel zu behandeln. Aus diesem Grund werden bei der Mischung der verschiedenen Bestandteile Analysen sowohl der Einsatzstoffe als auch der zu behandelnden Böden ebenso berücksichtigt wie die an sich bekannten Bedürfnisse der zu düngenden Kulturpflanzen.

Es versteht sich, daß zum Herstellen des erfindungsgemäßen Produktes nicht nur ausschließlich Sekundärrohstoffe, sondern auch gleichartige Primärrohstoffe verwendet werden können.

In der Summe entsteht ein Produkt, das einerseits als reines Kalkdüngemittel bodenverbessernd eingesetzt werden kann, andererseits aber auch die Möglichkeit bietet, die kompletten Belange der Pflanzenemährung zu berücksichtigen, eingeschlossen eine Verbesserung der Humusbilanz. Die Besonderheit des technischen Verfahrens basiert darauf, daß einerseits feste, lager-, transport- und umschlagstabile Produkte entstehen, die mit einfachen Streugeräten eine sehr gleichmäßige Nährstoffverteilung auf den zu behandelnden Bodenflächen ermöglichen; andererseits ein flüssiges Produkt entsteht, das mit dafür geeigneten Verteilgeräten durch das flächige Aufbringen auf den Boden höchsten Ansprüchen an die Dosiergenauigkeit genügt.

## Patentansprüche

1. Verfahren zur Herstellung von Düngemitteln für die Basen-Versorgung aller landwirtschaftlich, forstwirtschaftlich, gärtnerisch und landschaftsbaulich genutzten Böden durch gezieltes Vermischen und/oder Homogenisieren von anorganischen Sekundärrohstoffen mit hohem Gehalt an Oxiden, Hydroxiden, Carbonaten und/oder Silikaten des Calciums und/oder Magnesiums in Form von überwiegend basisch reagierenden Rückständen aus industriellen und/oder gewerblichen Prozessen, aus Wasseraufbereitungs- und/oder Filtrationsanlagen und von organischem Material mit spezifisch großer sorptiver Oberfläche in Form von feinst vermahlenen Getreiderückständen mit hohem Klebergehalt zur Verbesserung der Granulat-, Kompaktat- bzw. Pelletbildung und zur Stabilisierung der Fertigprodukte, wobei weder organische Siedlungsabfälle, darunter jedenfalls Klärschlamm, noch Sägemehl, noch Sägespäne, noch gehäckseltes oder gemahlenes Stroh, noch Rindenhumus zugesetzt werden.

2. Verfahren nach Anspruch 1, dadurch gekennzeichnet, daß zur weiteren Verbesserung der Granulat-, Kompaktat- bzw. Pelletbildung und Stabilisierung der Fertigprodukte als weitere Bestandteile
- Calcium- und/oder Magnesiumoxid und/oder -hydroxid,
- Huminate,
- Melasse,
- Vinasse,
- und/oder Polysaccharide
zugegeben werden.

3. Verfahren nach Anspruch 1 oder 2, dadurch gekennzeichnet, daß zur Verbesserung der Humusbilanz Wirtschaftsdünger in Form von Stallmist und/oder Gülle zugesetzt wird.

4. Verfahren nach Anspruch 1, 2 oder 3, dadurch gekennzeichnet, daß die nach dem Mischen hergestellten Granulate, Kompaktate bzw. Pellets in Fraktionen von > 0 bis 20 mm Durchmesser gesiebt werden und daß anfallendes Über- oder Unterkorn in den Verfahrenskreislauf zurückgeführt wird.

5. Verfahren zur Herstellung von Düngemitteln für die Basen-Versorgung aller landwirtschaftlich, forstwirtschaftlich, gärtnerisch und landschaftsbaulich genutzten Böden durch gezieltes Vermischen und/oder Homogenisieren von anorganischen Sekundärrohstoffen mit hohem Gehalt an Oxiden, Hydroxiden, Carbonaten und/oder Silikaten des Calciums und/oder Magnesiums in Form von überwiegend basisch reagierenden Rückständen aus industriellen und/oder gewerblichen Prozessen, aus Wasseraufbereitungs- und/oder Filtrationsanlagen und von organischem Material mit spezifisch großer sorptiver Oberfläche in Form von feinst vermahlenen Getreiderückständen mit hohem Klebergehalt und Überführung aller Bestandteile in eine lager-, transport-, umschlag- und ausbringstabile Suspension.

6. Verfahren nach Anspruch 5, dadurch gekennzeichnet, daß zur Verbesserung der Humusbilanz organische Sekundärrohstoffe zugemischt werden, nämlich Wirtschaftsdünger und/oder Siedlungsabfälle in Form von Stallmist, Gülle, Kompost bzw. Klärschlamm und/oder Sägemehl bzw. Sägespäne und/oder gehäckseltes oder gemahlenes Stroh und/oder Rindenhumus.

7. Verfahren nach einem der Ansprüche 1 bis 6, dadurch gekennzeichnet, daß zur Stickstoffanreicherung Harnstoff und/oder Ammoniumnitrat und/oder Calciumnitrat und/oder Ammoniumsulfat zugemischt werden, letzteres auch als Schwefelquelle.

8. Verfahren nach einem der Ansprüche 1 bis 7, dadurch gekennzeichnet, daß zur Einstellung der Pflanzenverfügbarkeit des Stickstoffs und zur Reduzierung der Stickstoffverluste aus organisch gebundenem Stickstoff Mineralisations- und/oder Nitrifikationshemmer zugemischt werden.

9. Verfahren nach einem der Ansprüche 1 bis 8, dadurch gekennzeichnet, daß zur Phosphoranreicherung Mono-, Di- und/oder Tricalciumphosphate zugemischt werden, Dicalciumphosphate vorzugsweise aus der Phosphatfällung kommunaler oder privater Abwasserreinigungsanlagen.

10. Verfahren nach einem der Ansprüche 1 bis 9, dadurch gekennzeichnet, daß zur Kaliumanreicherung Kaliumchlorid und/oder Kaliumcarbonat und/oder Kaliumsilikat und/oder Kaliumsulfat, insbesondere in Form von Rückstandkali, zugemischt werden, letztere Verbindung auch zur Schwefelanreicherung.

11. Verfahren nach einem der Ansprüche 1 bis 10, dadurch gekennzeichnet, daß zur Magnesiumanreicherung nicht nur Magnesiumoxid, -hydroxid und/oder -carbonat, sondern auch Magnesiumchlorid und Magnesiumsulfat zugemischt werden, letzteres auch als Schwefelquelle.

12. Verfahren nach einem der Ansprüche 1 bis 11, dadurch gekennzeichnet, daß zur Siliciumanreicherung Wasserglas und/oder Kieselgur, insbesondere in Form von Rückständen aus Filtrationsanlagen, zugemischt werden.

13. Verfahren nach einem der Ansprüche 1 bis 12, dadurch gekennzeichnet, daß Calcium- und/oder Magnesium- und/oder Kaliumsilikate als basisch wirkende, langsam lösliche Verbindungen, Calcium- und/oder Magnesiumcarbonate, -oxide und/oder -hydroxide als basisch wirkende, schneller reagierende Verbindungen zugemischt werden.

14. Verfahren nach einem der Ansprüche 1 bis 13, dadurch gekennzeichnet, daß alle basisch wirksamen Calcium- und/oder Kalium- und/oder Magnesiumverbindungen in der für den jeweiligen Boden günstigsten Kombination der chemischen Bindungsformen und in den jeweils entsprechenden Anteilen kombiniert werden.

15. Verfahren nach einem der Ansprüche 1 bis 14, dadurch gekennzeichnet, daß die Mikronährstoffe Mangan, Eisen, Zink, Kupfer, Molybdän, Cobalt und/oder Bor in Form von Salzen bzw. metallorganischen Komplexen zugemischt werden.

16. Verfahren nach einem der Ansprüche 1 bis 15, dadurch gekennzeichnet, daß vor dem Überführen in die Endform Stickstoff, Phosphat, Kali, Calcium, Magnesium, Schwefel, Silicium, Mangan, Eisen, Zink, Kupfer, Molybdän, Cobalt und/oder Bor in Form von geeigneten chemischen Verbindungen und in der erforderlichen Dosis zugemischt werden.

## Claims

1. A method for producing fertilisers for the basic conditioning of all soils used in agriculture, forestry, horticulture and landscaping, by selective mixing and/or homogenising of inorganic secondary raw materials with a high content of oxides, hydroxides, carbonates and/or silicates of calcium and/or magnesium in the form of preponderantly basically reacting residues from industrial and/or commercial processes, from water treatment and/or filtration plants, and of organic material with a specific large sorptive surface area in the form of very finely ground grain residues with a high gluten content for improving the granulation, compact formation or pelletising, and for stabilising the end products, wherein neither urban refuse, including in any case sewage sludge, nor sawdust, nor wood shavings, nor chopped or ground straw nor bark humus are added.

2. A method according to Claim 1, characterised in that to further improve granulation, compact formation or pelletising and stabilisation of the end products,
- calcium and/or magnesium oxide and/or hydroxide,
- salts of humic acids,
- molasses,
- vinasses,
- and/or polysaccharides
are added as further constituents.

3. A method according to Claim 1 or 2, characterised in that to improve the humus balance natural manures are added in the form of stable manure and/or liquid manure.

4. A method according to Claim 1, 2 or 3, characterised in that the granular materials, compacts or pellets produced after mixing, are screened in fractions of >0 to 20 mm diameter, and in that any resultant oversize or undersize material is returned to the process circuit.

5. A method for producing fertilisers for the basic conditioning of all soils used in agriculture, forestry, horticulture and landscaping, by selective mixing and/or homogenising of inorganic secondary raw materials with a high content of oxides, hydroxides, carbonates and/or silicates of calcium and/or magnesium in the form of preponderantly basically reacting residues from industrial and/or commercial processes, from water treatment and/or filtration plants, and of organic material with a specific large sorptive surface area in the form of very finely ground grain residues with a high gluten content and conversion of all the constituents into a suspension which is stable for storage, transport, handling and placement.

6. A method according to Claim 5, characterised in that to improve the humus balance organic secondary raw materials are admixed, namely natural manures and/or urban refuse, in the form of stable manure, liquid manure, compost or sewage sludge and/or sawdust or wood shavings and/or chopped or ground straw and/or bark humus.

7. A method according to any one of Claims 1 to 6, characterised in that, for nitrogen enrichment, urea and/or ammonium nitrate and/or calcium nitrate and/or ammonium sulphate are admixed, the latter also as a source of sulphur.

8. A method according to any one of Claims 1 to 7, characterised in that mineralisation and/or nitrification inhibitors are admixed so as to adjust the availability of nitrogen and to reduce nitrogen losses from organically bound nitrogen.

9. A method according to any one of Claims 1 to 8, characterised in that, for phosphorus enrichment, mono, di and/or tricalcium phosphates are admixed, the dicalcium phosphates preferably being from the phosphate precipitation of municipal or private waste water purification plants.

10. A method according to any one of Claims 1 to 9, characterised in that, for potassium enrichment, potassium chloride and/or potassium carbonate and/or potassium silicate and/or potassium sulphate, in particular in the form of residual potash, are admixed, the latter compound also for sulphur enrichment.

11. A method according to any one of Claims 1 to 10, characterised in that, for magnesium enrichment, not only magnesium oxide, hydroxide and/or carbonate are admixed but also magnesium chloride and magnesium sulphate, the latter also as a source of sulphur.

12. A method according to any one of Claims 1 to 11, characterised in that, for silicon enrichment, water glass and/or diatomaceous earth, in particular in the form of residues from filtration plants, are admixed.

13. A method according to any one of Claims 1 to 12, characterised in that calcium and/or magnesium and/or potassium silicates are admixed as basically acting, slowly soluble compounds, calcium and/or magnesium carbonates, oxides and/or hydroxides are admixed as basically acting, faster reacting compounds.

14. A method according to any one of Claims 1 to 13, characterised in that all the basically acting calcium and/or magnesium compounds are combined in the combination of the chemical bonding forms most favourable for the particular soil and in corresponding proportions respectively.

15. A method according to any one of Claims 1 to 14, characterised in that the micronutrients manganese, iron, zinc, copper, molybdenum, cobalt and/or boron are admixed in the form of salts or metallo-organic complexes.

16. A method according to any one of Claims 1 to 15, characterised in that, before conversion into the end form, nitrogen, phosphate, potash, calcium, magnesium, sulphur, silicon, manganese, iron, zinc, copper, molybdenum, cobalt and/or boron are admixed in the form of suitable chemical compounds and in the required dose.

## Revendications

1. Procédé de fabrication d'engrais pour l'amendement de base de tous les sols utilisés dans les domaines agricole, forestier, jardinier et paysager par mélangeage ciblé et/ou homogénéisation de matières premières inorganiques secondaires avec une teneur élevée en oxydes, hydroxydes, carbonates et/ou silicates de calcium et/ou de magnésium sous la forme de résidus réagissant principalement de manière basique issus de processus industriels et/ou professionnels, d'installations de retraitement et/ou de filtration des eaux, et de matériau organique avec une grande surface spécifique de sorption sous la forme de résidus de céréales finement broyés avec une teneur élevée en gluten pour améliorer la formation de granulés, pastilles ou boulettes et pour stabiliser le produit fini, sans ajout de résidus organiques de collectivités, y compris dans tous les cas les boues de curage, ni de sciure, ni de copeaux de bois, ni de paille hachée ou broyée, ni d'humus d'écorces.

2. Procédé selon la revendication 1, caractérisé en ce que, pour améliorer encore la formation de granulés, pastilles ou boulettes et pour stabiliser le produit fini, on ajoute comme autres constituants :
- de l'oxyde et/ou hydroxyde de calcium et/ou magnésium,
- des huminates,
- de la mélasse,
- de la vinasse,
- et/ou des polysaccharides.

3. Procédé selon la revendication 1 ou la revendication 2, caractérisé en ce que, pour améliorer le bilan humique, on ajoute du fumier sous la forme de fumier d'étable et/ou de lisier.

4. Procédé selon les revendications 1, 2 ou 3, caractérisé en ce que, après mélangeage, on tamise les granulés, pastilles ou boulettes produits pour obtenir des fractions de diamètre allant de > 0 à 20 mm et on recycle les déclassés supérieurs ou inférieurs dans le circuit du procédé.

5. Procédé de fabrication d'engrais pour l'amendement de base de tous les sols utilisés dans les domaines agricole, forestier, jardinier et paysager par mélangeage ciblé et/ou homogénéisation de matières premières inorganiques secondaires avec une teneur élevée en oxydes, hydroxydes, carbonates et/ou silicates de calcium et/ou de magnésium sous la forme de résidus réagissant principalement de manière basique issus de processus industriels et/ou professionnels, d'installations de retraitement et/ou de filtration des eaux, et de matériau organique avec une grande surface spécifique de sorption sous la forme de résidus de céréales finement broyés avec une teneur élevée en gluten , et transformation de l'ensemble des constituants en une suspension stable au stockage, au transport, à la manutention et à l'épandage.

6. Procédé selon la revendication 5, caractérisé en ce que, pour améliorer le bilan humique, on ajoute au mélange des matières premières organiques secondaires, en l'occurrence des fumiers et/ou des résidus de collectivités sous la forme de fumier d'étable, de lisier, de compost ou de boues de curage et/ou de la sciure, des copeaux de bois et/ou de la paille hachée ou broyée et/ou de l'humus d'écorces.

7. Procédé selon l'une des revendications 1 à 6, caractérisé en ce que, pour l'enrichir en azote, on ajoute au mélange de l'urée et/ou du nitrate d'ammonium et/ou du nitrate de calcium et/ou du sulfate d'ammonium, ce dernier servant également de source de soufre.

8. Procédé selon l'une des revendications 1 à 7, caractérisé en ce que, pour ajuster la phytodisponibilité de l'azote et pour réduire les pertes d'azote à partir de l'azote organique lié, on ajoute au mélange des inhibiteurs de minéralisation et/ou de nitrification.

9. Procédé selon l'une des revendications 1 à 8, caractérisé en ce que, pour l'enrichir en phosphore, on ajoute au mélange des phosphates mono-, di- ou tricalciques, le phosphate dicalcique provenant de préférence de la précipitation phosphatique des installations d'épuration des eaux usées communales ou privées.

10. Procédé selon l'une des revendications 1 à 9, caractérisé en ce que, pour l'enrichir en potassium, on ajoute au mélange du chlorure de potassium et/ou du carbonate de potassium et/ou du silicate de potassium et/ou du sulfate de potassium, notamment sous la forme de potasse résiduelle, le dernier cité de ces composés servant également pour l'enrichissement en soufre.

11. Procédé selon l'une des revendications 1 à 10, caractérisé en ce que, pour l'enrichir en magnésium, on ajoute au mélange non seulement de l'oxyde, hydroxyde et/ou carbonate de magnésium, mais aussi du chlorure de magnésium et du sulfate de magnésium, ce dernier servant également de source de soufre.

12. Procédé selon l'une des revendications 1 à 11, caractérisé en ce que, pour l'enrichir en silicium, on ajoute au mélange du verre soluble et/ou de la terre d'infusoires, notamment sous la forme de résidus d'installations de filtration.

13. Procédé selon l'une des revendications 1 à 12, caractérisé en ce que l'on ajoute au mélange des silicates de calcium et/ou magnésium et/ou potassium en tant que composés à action basique à dissolution lente et des carbonates, oxydes et/ou hydroxydes de calcium et/ou magnésium en tant que composés à action basique à réaction plus rapide.

14. Procédé selon l'une des revendications 1 à 13, caractérisé en ce que tous les composés de calcium et/ou potassium et/ou magnésium à action basique sont combinés selon la combinaison de formes de liaison chimique et dans les proportions correspondantes les plus favorables pour les différents sols.

15. Procédé selon l'une des revendications 1 à 14, caractérisé en ce que l'on ajoute au mélange les oligo-éléments manganèse, fer, zinc, cuivre, molybdène, cobalt et/ou bore sous la forme de sels ou de complexes organométalliques.

16. Procédé selon l'une des revendications 1 à 15, caractérisé en ce que, avant de le transformer en sa forme finale, on ajoute au mélange de l'azote, du phosphate, de la potasse, du calcium, du magnésium, du soufre, du silicium, du manganèse, du fer, du zinc, du cuivre, du molybdène, du cobalt et/ou du bore sous la forme de composés chimiques appropriés et à la dose nécessaire.
